# EUROPÄISCHE PATENTSCHRIFT

(11) **EP 1 171 720 B1**
(45) Veröffentlichungstag und Bekanntmachung des Hinweises auf die Patenterteilung: **10.09.2003**
(21) Anmeldenummer: 00926743.6
(22) Anmeldetag: 21.03.2000
(51) Int. Cl.: F16D 23/04

(54) **SYNCHRONKÖRPER MIT INTEGRIERTEM RASTELEMENT**
SYNCHRONIZER BODY COMPRISING AN INTEGRATED DETENT ELEMENT
CORPS SYNCHRONE A ELEMENT D'ARRET INTEGRE

(30) Priorität: 16.04.1999 DE 19917231
(43) Veröffentlichungstag der Anmeldung: 16.01.2002
(73) Patentinhaber: INA-Schaeffler KG, 91074 Herzogenaurach (DE)
(72) Erfinder: SCHWUGER, Josef, D-91315 Höchstadt (DE); SINNER, Rudolf, D-91088 Bubenreuth (DE); WALDERT, Hartwig, D-91325 Aisch (DE)
(86) Internationale Anmeldenummer: EP0002461
(87) Internationale Veröffentlichungsnummer: WO00063573

(56) Entgegenhaltungen:
- DE-A- 2 537 495
- DE-A- 19 821 565
- DE-A- 19 832 729
- DE-C- 19 580 558
- US-A- 4 131 032

## Beschreibung

### Gebiet der Erfindung

Die Erfindung betrifft einen Synchronkörper einer Synchronisiereinrichtung für Schaltgetriebe mit einem Grundkörper, einer Innenverzahnung und einer Außenverzahnung und zumindest einer in dem Grundkörper ausgebildeten Aufnahme für ein federbelastetes Radelement mit den Merkmalen, wie in Patentanspruch 1 angegeben.

### Hintergrund der Erfindung

In modernen handgeschalteten Getrieben werden Synchronisiereinrichtungen eingesetzt um auf komfortable Art ein Schalten zwischen den einzelnen Gangstufen zu ermöglichen. Beim Schaltvorgang wird mittels verschiedener Elemente der Synchronisiereinrichtung die Umfangsgeschwindigkeit eines Gangrades der Umfangsgeschwindigkeit der Getriebewelle angepaßt und dann eine. formschlüssige Verbindung zwischen der Getriebewelle und diesem Gangrad hergestellt. Verschiedene Ausführungsbeispiele von Synchronisiereinrichtugnen sind im deutschen Fachbuch "Zahnradgetriebe" von Johannes Loomann, 1996, Seite 452 ff. beschrieben. Der Synchronkörper ist dabei ein wichtiges Bauelement der Synchronisiereinrichtung. Durch den Synchronkörper sind die Getriebewelle und die Schiebemuffe der Synchronisiereinrichtung drehfest miteinander verbunden. Das erfolgt in der Regel dadurch, daß der Synchronkörper einerseits in Umfangsrichtung formschlüssig über ein an seiner Nabe ausgebildetes Keilprofil oder Verzahnungsprofil mit der Getriebewelle verbunden ist, und andererseits über eine Außenverzahnung seines Muffenträgers die Schiebemuffe an seinem Außendurchmesser entlang der Längsmittelachse der Getriebewelle verschiebbar aufnimmt. Weiterhin dient der Synchronkörper je nach seiner Ausführung als Anschlags- und Führungselement für Synchron- bzw. Reibringe.

Der Synchronkörper ist häufig mit in gleichmäßigen Abständen an seinem Außenumfang ausgearbeiteten Aufnahmen für Rastelemente, wie Rastbolzen und Rastkugeln, und für Druckstücke versehen. Die Rastelemente halten die Schiebemuffe in ihrer Mittelstellung, wenn kein Gangrad geschaltet ist. Dabei sind die Rastelemente unter Federvorspannung in eine Rastnut der Schiebemuffe gepreßt, oder das Rastelement wirkt auf ein Druckstück, das wiederum in einer Rastnut der Schiebemuffe aufgenommen ist.

Bei derartigen Synchroneinrichtungen dienen die. in den Aufnahmen des Synchronkörpers angeordneten Druckstücke während eines Schaltvorganges zum Vorsynchronisieren, d.h. zur Bewegung des jeweiligen Synchronringes gegen eine Reibfläche des benachbarten Kupplungskörpers oder Zwischenringes bei z. B. Doppelkonussynchronisationen der Synchronisiereinrichtung. Je nach Ausführung der Synchronisiereinheit wird das Druckstück entweder direkt durch eine bzw. zwei Federn oder durch einen vorgespannten Rastbolzen bzw. Rastkugel in eine Rastnut in der Schiebemuffe vorgespannt. Wird die Schiebemuffe zur Gangwahl axial bewegt, so wird über die innere Kontur ihrer Rastnut das Druckstück mit einem Druckende axial gegen den Synchronring geschoben. Der Synchronring wird dadurch gegen die Reibfläche gepreßt.

Synchronkörper nach dem derzeitigen Stand der Technik werden entweder spanabhebend oder spanlos gefertigt.

Die spanabhebende Fertigung ist aufwendig und teuer. Dabei werden Rohlinge durch verschiedenste spanabhebende Bearbeitungsverfahren in ihre endgültige Form gebracht. Besonders zeit- und kostenaufwendig ist dabei die Gestaltung der Verzahnung und der oben beschriebenen Aufnahmen für die Rastelemente. Die Aufnahmen werden durch z. B. Räumen oder Bohren aus dem vollem Material des Rohlings ausgearbeitet.

Derartige Synchronringe sind in sehr kompakter und geschlossener Bauweise ausgebildet und haben deshalb einen hohen Material- und Gewichtsanteit. Besonders in der Massenfertigung fallen deshalb sehr hohe Material- und Fertigungskosten an. Vorteilhaft bei derartig ausgebildeten Synchronkörpem ist deren hohe Festigkeit unter Last.

Für die spanlose Fertigung von Synchronkötpem wird als Ausgangsmaterial z. B. Blech oder Bandmaterial verwendet; das durch Trennen und Umformen in seine bestimmungsgemäße Form gebracht wird. Dabei ist die Dicke des Ausgangsmaterials und dessen Gewicht durch funktionelle Erfordernisse und die erforderliche Festigkeit des Fertigteils bestimmt.

Ein Großteil des zur Fertigung eingesetzten Ausgangsmaterials wird tatsächlich zur Bildung der geometrischen Form des Synchronkörpers verwendet und geht nicht durch aufwendige spanende Ausarbeitung verloren. Ein spanlos gefertigter Synchronkörper enthält somit auch kein überflüssiges Material, sondem nur so viel wie für seine Funktion und Festigkeit erforderlich ist.

Ein Synchronkörper der gattungsbildenden Art ist in AS 25 37 495 beschrieben. Der Synchronkörper ist aus zwei an ihren Stimseiten miteinander verbundenen Blechformteilen gebildet. Die Fügeebende bildet dabei die Quermittelebene des Synchrokörpers. Jedes der Blechformteile ist in einem spanlosen Umformverfahren geformt und bildet jeweils eine Hälfte der Außenverzahnung und der Innenverzahnung sowie des Grundkörpers.

Von Vorteil ist, daß in einem Umformverfahren gefertigte Synchronkörper in der Massenfertigung sehr material- und zeitsparend hergestellt werden können. Die Kosten für ihre Fertigung sind deshalb gering. Derartig ausgeführt Synchronkörper haben sich bisher wenig durchgesetzt, da u. a. die Kosten für die Herstellung der Formwerkzeuge hoch sind, die Formwerkzeuge deswegen sehr einfach gehalten sind und sich erst bei der Fertigung von größeren Stückzahlen rentieren. Außerdem bietet die relativ dünnwandige Ausbildung derartiger Synchronkörper wenig Raum für die Gestaltung komplex ausgebildeter, und damit den hohen Anforderungen moderner Synchronisiereinrichtungen angepaßter Formen.

Die oben stehend erwähnten Rastelemente sind in der Regel durch, mit einer oder mehreren Fedem belastete, Kugeln oder Bolzen gebildet. Die Rastelemente werden bei der Montage der Synchronisiereinrichtung einzeln mit den Federn oder in Form einer vormontierten Arretierung in die Aussparungen eingelegt. Die vormontierte Arretierung ist dabei zumeist durch ein Gehäuse gebildet, in dem das Rastelement und die Feder vorgespannt und gehalten sind. Nachteilig ist bei der Montage derartiger Synchronisiereinrichtung, daß die genannten Elemente bei ihrer Montage aus den Ausnehmungen herausfalten können, die Montage unvollständig erfolgt oder Teile verwechselt werden. Die Vormontage der Arretierungen verursacht außerdem zusätzlichen Fertigungsaufwand und somit zusätzliche Kosten.

### Zusammenfassung der Erfindung

Aufgabe der Erfindung ist es daher, Synchronkörper zu schaffen, deren Hauptbestandteile spanlos und insbesondere im Umformverfahren gefertigt sind und die sich in der Massenfertigung aber auch in kleineren Stückzahlen kostengünstig fertigen lassen.

Diese Aufgabe wird nach dem. kennzeichnenden Teil des Anspruches 1 und/oder des Anspruches 5 gelöst. Der Gegenstand des Anspruches 1 bezieht sich auf einen Synchronkörper, der sich insbesondere in der Massenfertigung kostengünstig herstellen läßt. Der Grundkörper dieses Synchronkörpers ist aus einem ersten sowie einem zweiten im Umformverfahren gefertigten Blechformteil gebildet. An dem ersten und an dem zweiten Blechformteil sind jeweils an dem Innenumfang und an dem Außenumfang Verzahnungsprofile ausgeformt. Die an den Außenumfängen ausgeformten Verzahnungsprofile bilden, nach dem die Blechformteile aneinander befestigt sind, die Außenverzahnung. Die an den Innenumfängen ausgeformten Verzahnungsprofile bilden an dem Grundkörper, nach dem die Blechformteile aneinander befestigt sind, die Innenverzahnung.

Der Gegenstand des Anspruches 5 begründet einen Synchronkörper, dessen Grundkörper ebenfalls aus einem ersten sowie zweiten in einem Umformverfahren gefertigten Blechformteilen gebildet ist. Im Gegensatz zu dem nach Anspruch 1 beschriebenen Synchronkörper weist der Synchronkörper eine getrennt vom Grundkörper gefertigte Außenverzahnung und Innenverzahnung auf. Die Außenverzahnung ist dabei bevorzugt als Blechumformteil einstückig ausgebildet oder aus blechgeformten Segmenten zusammengesetzt. Die Innenverzahnung ist an einer bevorzugt in einem spanlosen Fertigungsverfahren hergestellten Nabe ausgebildet. Die einzelnen Teile werden nach ihrer Fertigung aneinander befestigt. Der Synchronkörper ist also aus mehreren nur relativ einfach gestalteten Werkzeugen herzustellen und deshalb insbesondere für die Fertigung von kleineren Stückzahlen geeignet. Den Synchronkörpem nach dem kennzeichnenden Teil von Anspruch 1 und Anspruch 5 liegt der einheitliche Erfindungsgedanke zugrunde, daß zumindest an einem der Blechformteile, die den Grundkörper bilden, eine Ausformung eingebracht ist. Diese Ausformung bildet, nach dem die Blechformteile aneinander befestigt sind, die Aufnahme für das Arretierelement. Gleichzeitig ist vorgesehen, daß das Arretierelement einschließlich einer oder mehrerer das Arretierelement vorspannenden Federn am Grundkörper bzw. an der Verzahnung durch ein Sicherungselement unverlierbar im Synchronkörper gehalten ist. Die Synchronkörper sind demnach zusammen mit den Rastelementen zu einer Baueinheit vormontiert. Das Auftreten der anfangs erwähnten Fehler während der Montage der Synchronisiereinrichtungen ist ausgeschlossen.

Die Rastelemente sind in den Synchronkörper nach Anspruch 1 vorzugsweise einzubringen, wenn die beiden Blechformteile aneinander befestigt sind. Anschließend ist das Rastelement gegen die Feder vorgespannt an der Öffnung durch das Sicherungselement gesichert.

Bevorzugte Ausführungsformen der Erfindung nach Anspruch 1 sehen vor, daß das Sicherungselement an der Öffnung plastisch aus dem Material von zumindest einem der beiden Blechformteilte ausgeformt ist und einen Vorsprung bildet. Dieser Vorsprung ist z. B. durch Prägen geformt. Mit einer derartigen Lösung ist eine kostengünstige Variante der Sicherung geschaffen, die mit dem Einbringen der Feder und des Rastelementes in die Aufnahme verbunden werden kann.

Eine weitere Ausgestaltung der Erfindung nach Anspruch 1 sieht vor, das Sicherungselement durch eine Hülse zu bilden. Die Hülse, vorzugsweise als ein dünnwandiges Umformteil ausgebildet, ist am Boden gelocht, über das Rastelement gestülpt in die Aufnahme eingepreßt oder wiederum durch eine Prägung an der Öffnung gesichert.

Als weitere Ausführungsform eines Sicherungselementes ist eine mit einem Loch versehene Scheibe vorgesehen. Die Scheibe ist an der Öffnung eingepreßt und/oder wiederum durch Prägungen gehalten. Das Rastelement taucht in das Loch der Scheibe ein.

Als bevorzugte Ausführungsform eines Sicherungselementes für die Sicherung eines Rastelementes in einem Synchronkörper nach Anspruch 5 ist ein Vorsprung vorgesehen, der an der Öffnung aus dem Material der Außenverzahnung hervorsteht. Dieser Vorsprung kann als umlaufender Bord ausgebildet sein und ist wiederum bevorzugt durch Prägen ausgebildet.

Schließlich ist für bevorzugte Ausführungsformen der Synchronköfper nach Anspruch 1. oder 5 vorgesehen, daß das Rastelement durch eine Kugel oder einen Bolzen gebildet ist.

### Kurze Beschreibung der Zeichnungen

Die Erfindung wird nachfolgend anhand von Ausführungsbeispielen erläutert. Es zeigen:
- Figur 1: eine Teilansicht eines Ausführungsbeispieles eines Synchronkörpers, dessen Grundkörper aus zwei einstückig mit der Verzahnung ausgebildeten halbschalenförmigen Blechformteilen zusammengesetzt ist, im Schnitt,
- Figur 2: eine Teilansicht in der Draufsicht des Synchronkörpers nach Figur 1,
- Figur 3: eine alternative Ausführungsform zu dem Sicherungselement nach Figur 2,
- Figur 4: eine weitere Teilansicht eines Ausführungsbeispieles eines Synchronkörpers, dessen Rastelement durch eine Hülse gesichert ist, im Schnitt,
- Figur 5: eine Teilansicht eines Ausführungsbeispieles eines Synchronkörpers, bei dem das Sicherungselement durch eine Scheibe gebildet ist,
- Figur 6: eine Teilansicht eines Berspieles eines Synchronkörpers, dessen Außenverzahnung und Innenverzahnung separat vom Grundkörper gefertigt ist, im Schnitt,
- Figur 7: eine Teilansicht eines Schnittes durch den Synchronkörper nach Figur 6 entlang der Linie VII-VII.

### Detaillierte Beschreibung der Zeichnungen

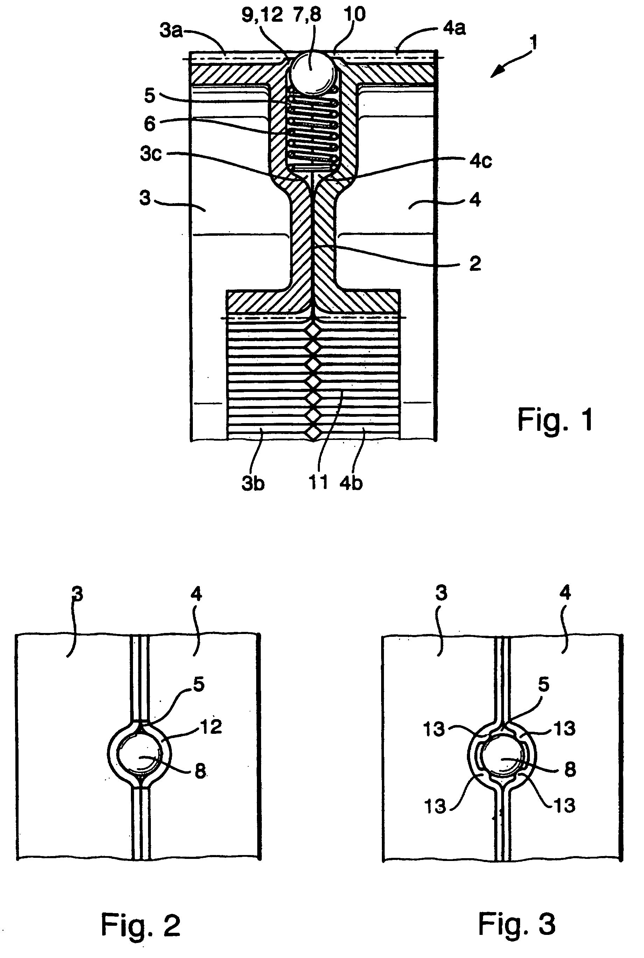

In Figur 1 ist mit 1 ein Synchronkörper dargestellt, dessen Grundkörper 2 durch ein erstes Blechformteil 3 und ein zweites Blechformteil 4 gebildet ist. Das erste Blechformteil 3 sowie das zweite Blechformteil 4 sind halbschalenförmig ausgebildete Formteile. An dem äußeren Umfang des ersten Blechformteiles 3 sowie des zweiten Blechformteiles 4 ist ein äußeres Verzahnungsprofil 3a bzw. 4a und am inneren Umfang der Blechformteile 3, 4 ein inneres Verzahnungsprofil 3b bzw. 4b ausgeformt. Die äußeren Verzahnungsprofile 3a, 4a bilden am Grundkörper 2 die Außenverzahnung 10 und die inneren Verzahnungsprofile 3b, 4b bilden die Innenverzahnung 11. Das erste Blechformteil 3 und das zweite Blechformteil 4 sind mit Ausformungen 3c bzw. 4c versehen. Die Ausformungen 3c und die Ausformungen 4c bilden am Grundkörper 2 zusammen eine Aufnahme 5. In der Aufnahme 5 sind ein als Kugel 8 ausgebildetes Rastelement 7 und eine Druckfeder 6 aufgenommen. Die Druckfeder 6 spannt die Kugel 8 gegen ein an der Öffnung der Aufnahme 5 angeordnetes Sicherungselement 9 vor. Wie aus Figur 2 ersichtlich, ist das Sicherungselement 9 durch einen Bord 12 gebildet. Jeweils eine Hälfte des Bordes 12 ist aus dem Material des ersten Blechformteiles 3 bzw. des zweiten Blechformteiles 4 ausgeformt.

Figur 3 zeigt eine alternative Ausbildung des Sicherungselementes 9. Das Sicherungselement 9 ist durch plastisch an der Öffnung 5 aus dem Material des ersten Blechformteiles 3 und zweiten Blechformteiles 4 ausgeformte Vorsprünge 13 gebildet.

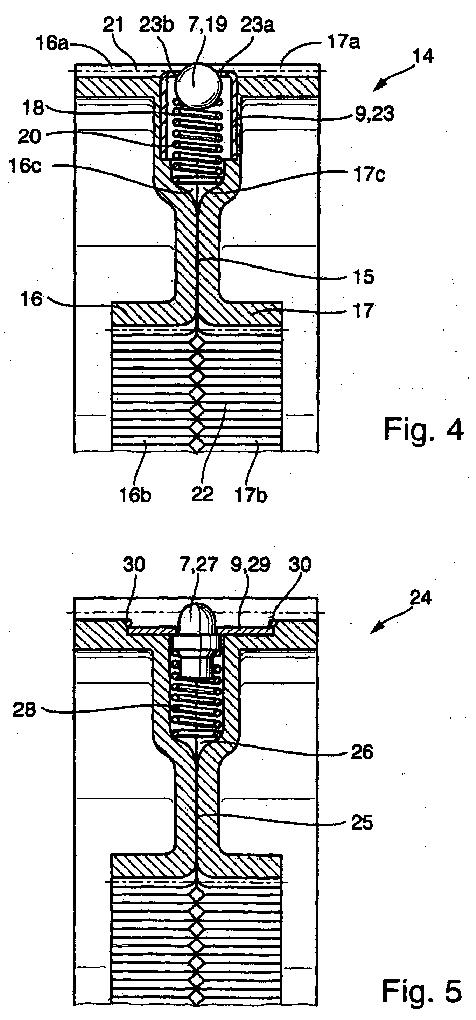

Ein Ausführungsbeispiel eines Synchronkörpers 14 ist in Figur 4 dargestellt. Der Synchronkörper 14 ist aus einem Grundkörper 15, Rastelementen 7 in Form von Kugeln 19 und Druckfedern 20 gebildet. Der Grundkörper 15 ist wiederum aus einem ersten Blechformteil 16 und einem zweiten Blechformteil 17 zusammengesetzt. Die äußeren Verzahnungsprofile 16a und 17a an dem ersten Blechformteil 16 bzw. zweiten Blechformteil 17 bilden die Außenverzahnung 21 und die inneren Verzahnungsprofile 16b bzw. 17b bilden die Innenverzahnung 22 des Synchronkörpers 14. Ausformungen 16c am ersten Blechformteil 16 sowie 17c am zweiten Blechformteil 17 bilden Aufnahmen 18. In den Aufnahmen 18 sind Rastelemente 7 in Form von Kugeln 19 sowie Druckfedern 20 aufgenommen. Jeweils eine Druckfeder 20 spannt eine Kugel 19 gegen ein als Hülse 23 ausgebildetes Sicherungselement 9. Die Hülse 23 ist in ihrem Boden 23a mit einem Loch 23b versehen. In das Loch 23b taucht die Kugel 19 teilweise ein. Die Hülse 23 ist in den Grundkörper 15 eingepreßt.

Figur 5 zeigt einen Ausschnitt eines Längsschnittes durch einen Synchronkörper 24. In dem Grundkörper 25 des Synchronkörpers 24 ist eine Aufnahme 26 ausgebildet. In der Aufnahme 26 sind ein Rastelement 7 in Form eines Bolzens 27 sowie eine Druckfeder 28 aufgenommen. Die Druckfeder 28 spannt den Bolzen 27 gegen eine an der Öffnung der Aufnahme 26 angeordnete, gelochte und eingepreßte Scheibe 29. Die Scheibe 29 wird zusätzlich durch plastisch aus dem Material des Grundkörpers 25 geformte Prägungen 30 gesichert.

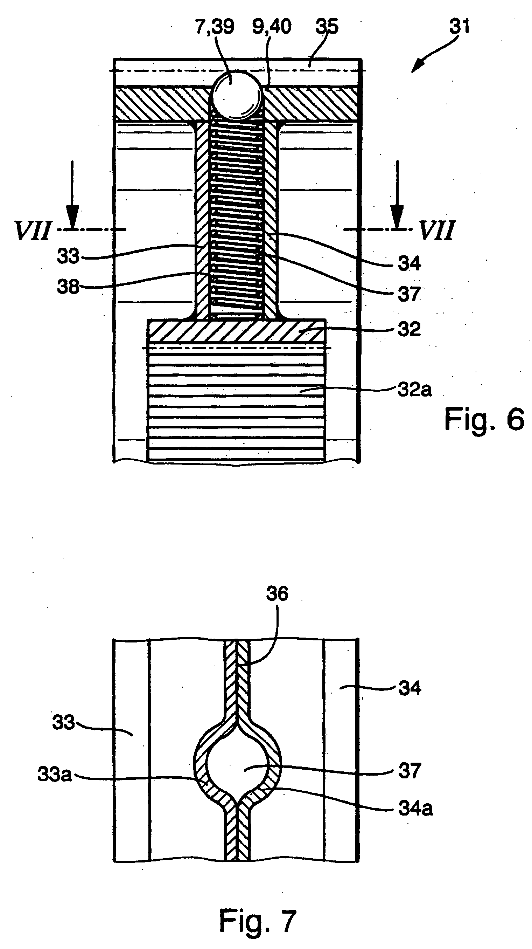

Ein Ausführungsbeispiel eines Synchronkörpers nach dem Gegenstand des Anspruches 6 ist mit dem Synchronkörper 31 in Figur 6 und 7 dargestellt. Der Synchronkörper 31 setzt sich zusammen aus einer Nabe 32, einem ersten Blechformteil 33, einem zweiten Blechformteil 34 und einer Außenverzahnung 35. An der separat gefertigten Nabe 32 ist die Innenverzahnung 32a ausgeformt. Die Außenverzahnung 35 ist ebenfalls separat gefertigt. An dem ersten Blechformteil 33 und dem zweiten Blechformteil 34 ist, wie aus Figur 7 ersichtlich, jeweils eine Ausformung 33a bzw. 34a ausgebildet. Die Ausformungen 33a und 34a bilden an dem Grundkörper 36 gemeinsam die Aufnahme 37. In der Aufnahme 37 ist eine Druckfeder 38 geführt. Die Druckfeder 38 spannt das Rastelement 7, ausgebildet als Kugel 39 gegen ein an der Öffnung eines Loches 41 der Außenverzahnung 35 ausgeformtes Sicherungsetement 9. Das Sicherungselement 9 ist durch einen aus dem Material der Außenverzahnung geformten Bord 40 gebildet. Die Nabe 32, die Außenverzahnung 35 und die Abschnitte 33 bzw. 34 sind miteinander verschweißt.

### Bezugszeichen

- 1: Synchronkörper
- 2: Grundkörper
- 3: erstes Blechformteil
- 3a: äußeres Verzahnungsprofil
- 3b: inneres Verzahnungsprofil
- 3c: Ausformung
- 4: zweites Blechformteil
- 4a: äußeres Verzahnungsprofil
- 4b: inneres Verzahnungsprofil
- 4c: Ausformung
- 5: Aufnahme
- 6: Druckfeder
- 7: Rastelement
- 8: Kugel
- 9: Sicherungselement
- 10: Außenverzahnung
- 11: Innenverzahnung
- 12: Bord
- 13: Vorsprung
- 14: Synchronkörper
- 15: Grundkörper
- 16: erstes Blechformteil
- 16a: äußeres Verzahnungsprofil
- 16b: inneres Verzahnungsprofil
- 16c: Ausformung
- 17: zweites Blechformteil
- 17a: äußeres Verzahnungsprofil
- 17b: inneres Verzahnungsprofil
- 17c: Ausformung
- 18: Aufnahme
- 19: Kugel
- 20: Druckfeder
- 21: Außenverzahnung
- 22: Innenverzahnung
- 23: Hülse
- 23a: Boden
- 23b: Loch
- 24: Synchronkörper
- 25: Grundkörper
- 26: Aufnahme
- 27: Bolzen
- 28: Druckfeder
- 29: Scheibe
- 30: Prägung
- 31: Synchronkörper
- 32: Nabe
- 32a: Innenverzahnung
- 33: erstes Blechformteil
- 33a: Ausformung
- 34: zweites Blechformteil
- 34a: Ausformung
- 35: Außenverzahnung
- 36: Grundkörper
- 37: Aufnahme
- 38: Druckfeder
- 39: Kugel
- 40: Bord
- 41: Loch

## Patentansprüche

1. Synchronkörper (1, 14, 24, 31) einer Synchronisiereinrichtung für Schaltgetriebe mit einem Grundkörper (2, 15, 25, 36), einer Innenverzahnung (11, 22, 32a), einer Außenverzahnung (10, 21, 35) und zumindest einer in dem Grundkörper (2, 15, 25, 36) ausgebildeten Aufnahme (5, 18, 26, 37) für ein federbelastetes Rastelement (7), mit den Merkmalen:
- der Synchronkörper (1, 14, 24, 31) greift mit der Innenverzahnung (11, 22, 32a) verdrehfest in eine Gegenverzahnung einer Getriebewelle ein,
- der Synchronkörper (1, 14, 24, 31) nimmt mit der Außenverzahnung (10, 21, 35) eine Schiebemuffe auf,
- der Grundkörper (2, 15, 36) ist aus zumindest einem ersten Blechformteil (3, 16, 33) und einem zweiten Blechformteil (4, 17, 34) zusammengesetzt,
- die beiden Blechformteile (3, 4, 15, 17, 33, 34) sind jeweils einzeln in einem Umformverfahren gefertigt sowie anschließend zueinander ausgerichtet und aneinander befestigt,
- zwischen den Blechformteilen (3, 4, 33, 34) ist durch zumindest eine Ausformung (3c, 4c, 16c, 17c, 33a, 34a) mindestens eine radial verlaufende Aufnahme (5, 18, 26, 37) ausgebildet, die eine zur Schiebemuffe gerichtete Öffnung aufweist,
- in der Aufnahme (5, 18, 26, 37) ist das wenigstens teilweise aus der Öffnung hervorstehende sowie auf die Schiebemuffe oder ein Druckstück wirkende Rastelement (7) aufgenommen und
- das Rastelement (7) ist unter Wirkung zumindest einer sich in der Aufnahme abstützenden Feder (6, 20, 28, 38) gegen ein an der Öffnung angeordnetes Sicherungselement (9) vorgespannt.

2. Synchronkörper nach Anspruch 1, bei dem das Sicherungselement (9) durch mindestens einen plastisch an der Öffnung aus dem Material von zumindest einem der genannten Blechformteile ausgeformten Vorsprung (12, 13) gebildet ist.

3. Synchronkörper nach Anspruch 1, bei dem das Sicherungselement (9) durch eine über das Rastelement (7) gestülpte und an der Aufnahme (18) befestigte Hülse (23) mit einem Loch (23b) im Hülsenboden (23a) gebildet ist und wobei das Rastelement (7) in das Loch (23b) eintauchend sowie teilweise über die Hülse (23) in Richtung Schiebemuffe hinausragend an dem Hülsenboden (23a) anliegt.

4. Synchronkörper (24) nach Anspruch 1, bei dem das Sicherungselement (9) durch eine an der Öffnung verankerte und gelochte Scheibe (29) gebildet ist und wobei das Rastelement (7) in die Scheibe (29) eintauchend sowie teilweise über die Scheibe (29) in Richtung Schiebemuffe hinausragend an der Scheibe (29) anliegt.

5. Synchronkörper (31) nach Anspruch 1, bei dem
- zwischen den Blechformteilen (33, 34) durch zumindest eine Ausformung (33a, 34a) zumindestens eine radial verlaufende zylindrische Aufnahme (37) ausgebildet ist,
- die Innenverzahnung (32a) an einer separat gefertigten Nabe (32) ausgebildet ist,
- die Außenverzahnung (35) aus mindestens zwei schalenförmigen Segmenten oder einem ringförmigen Einzelteil gebildet ist,
- die Außenverzahnung (35) und die Innenverzahnung (32a) an dem Grundkörper (36) ausgerichtet und befestigt sind,
und bei dem
- die Aufnahme (37) sich in einem in die Außenverzahnung (35) in radiale Richtung eingebrachten Loch (41) mit einer zur Schiebemuffe weisenden Öffnung fortsetzt.

6. Synchronkörper (24) nach Anspruch 5, bei dem das Sicherungselement (7) durch mindestens einen an der Öffnung aus dem Material der Außenverzahnung hervorstehenden Bord (40) gebildet ist.

7. Synchronkörper (1, 14, 24) nach Anspruch 1 oder 5, bei dem das Rastelement (7) durch eine Kugel (8, 19, 39) oder einen Bolzen (27) gebildet ist.

## Claims

1. Synchronizer body (1, 14, 24, 31) of a synchronizing device for shift transmissions, with a basic body (2, 15, 25, 36), with an internal toothing (11, 22, 32a), with an external toothing (10, 21, 35) and with at least one receptacle (5, 18, 26, 37) formed in the basic body (2, 15, 25, 36) and intended for a spring-loaded detent element (7), having the features:
- the synchronizer body (1, 14, 24, 31) engages fixedly in terms of rotation by means of the internal toothing (11, 22, 32a) into a countertoothing of a transmission shaft,
- the synchronizer body (1, 14, 24, 31) receives, by means of the external toothing (10, 21, 35), a sliding sleeve,
- the basic body (2, 15, 36) is composed of at least one first sheet-metal moulding (3, 16, 33) and one second sheet-metal moulding (4, 17, 34),
- the two sheet-metal mouldings (3, 4, 15, 17, 33, 34) are in each case manufactured individually in a forming method and are subsequently aligned with one another and fastened to one another,
- at least one radially running receptacle (5, 18, 26, 37), which has an orifice directed towards the sliding sleeve, is formed between the sheet-metal mouldings (3, 4, 33, 34) by means of at least one shaped-out portion (3c, 4c, 16c, 17c, 33a, 34a),
- the receptacle (5, 18, 26, 37) receives the detent element (7) projecting at least partially from the orifice and acting on the sliding sleeve or a thrust piece, and
- the detent element (7) is prestressed, under the action of at least one spring (6, 20, 28, 38) supported in the receptacle, against a securing element (9) arranged at the orifice.

2. Synchronizer body according to Claim 1, in which the securing element (9) is formed by at least one projection (12, 13) shaped at the orifice plastically out of the material of at least one of the said sheet-metal mouldings.

3. Synchronizer body according to Claim 1, in which the securing element (9) is formed by a jacket (23) slipped over the detent element (7) and fastened to the receptacle (18) and having a hole (23b) in the jacket bottom (23a), and in which the detent element (7), penetrating into the hole (23b) and projecting partially above the jacket (23) in the direction of the sliding sleeve, comes to bear on the jacket bottom (23a).

4. Synchronizer body (24) according to Claim 1, in which the securing element (9) is formed by a holed disc (29) anchored at the orifice, and in which the detent element (7), penetrating into the disc (29) and projecting partially above the disc (29) in the direction of the sliding sleeve, comes to bear on the disc (29).

5. Synchronizer body (31) according to Claim 1, in which
- at least one radially running cylindrical receptacle (37) is formed between the sheet-metal mouldings (33, 34) by means of at least one shaped-out portion (33a, 34a),
- the internal toothing (32a) is formed on a separately manufactured hub (32),
- the external toothing (35) is formed from at least two shell-shaped segments or from an annular individual part,
- the external toothing (35) and the internal toothing (32a) are aligned and fastened to the basic body (36),
and in which
- the receptacle (37) is continued in a hole (41) introduced into the external toothing (35) in the radial direction and having an orifice pointing towards the sliding sleeve.

6. Sychronizer body (24) according to Claim 5, in which the securing element (7) is formed by at least one rim (40) projecting at the orifice out of the material of the external toothing.

7. Synchronizer body (1, 14, 24) according to Claim 1 or 5, in which the detent element (7) is formed by a ball (8, 19, 39) or a bolt (27).

## Revendications

1. Synchroniseur (1, 14, 24, 31) d'un dispositif de synchronisation pour boîte de vitesses comportant un élément de base (2, 15, 25, 36), un engrenage intérieur (11, 22, 32a), un engrenage extérieur (10, 21,. 35) et au moins un logement (5, 18, 26, 37) ménagé dans l'élément de base (2, 15, 25, 36) et destiné à recevoir un élément d'arrêt (7) sollicité par un ressort et ayant les caractéristiques suivantes :
- l'engrenage intérieur (11, 22, 32a) du synchroniseur (1, 14, 24, 31) se met en prise avec un engrenage complémentaire d'un arbre d'engrenage de manière à être solidaire en rotation dudit arbre,
- l'engrenage extérieur (10, 21, 35) du synchroniseur (1, 14, 24, 31) reçoit un manchon baladeur,
- l'élément de base (2, 15, 36) est composé d'une première tôle formée (3, 16, 33) et d'une deuxième tôle formée (4, 17, 34) au moins,
- les deux tôles formées (3, 4, 15, 17, 33, 34) sont réalisées chacune séparément par un procédé de formage, puis orientées de manière à se faire face avant d'être fixées l'une à l'autre,
- entre les tôles formées (3, 4, 33, 34) est ménagé au moins un logement (5, 18, 26, 37) orienté radialement et formé par au moins un renfoncement (3c, 4c, 16c, 17c, 33a, 34a), ledit logement présentant une ouverture dirigée vers le manchon baladeur,
- le logement (5, 18, 26, 37) reçoit l'élément d'arrêt (7) qui s'étend du moins en partie en saillie à partir de l'ouverture et qui agit sur le manchon baladeur ou sur une pièce de compression et
- l'élément d'arrêt (7) est sollicité contre un élément de fixation (9) disposé à la hauteur de l'ouverture sous l'action d'au moins un ressort (6, 20, 28, 38) prenant appui dans le logement.

2. Synchroniseur selon la revendication 1, où l'élément de fixation (9) est formé par au moins une saillie (12, 13) venue de matière avec au moins une desdites tôles formées à la hauteur de l'ouverture.

3. Synchroniseur selon la revendication 1, où l'élément de fixation (9) est formé par une douille (23) dans le fond (23a) de laquelle est ménagé un trou (23b), ladite douille coiffant l'élément d'arrêt (7) et étant fixée sur le logement (18) et où l'élément d'arrêt (7) pénètre dans le trou (23b) et fait en partie saillie hors de la douille (23) dans la direction du manchon baladeur, venant ainsi en appui contre le fond (23a) de la douille.

4. Synchroniseur (24) selon la revendication 1, où l'élément de fixation (9) est formé par un disque perforé (29) ancré à la hauteur de l'ouverture et où l'élément d'arrêt (7) pénètre dans le disque (29) et fait en partie saillie hors du disque (29) dans la direction du manchon baladeur, venant ainsi en appui contre le disque (29).

5. Synchroniseur (31) selon la revendication 1, où
- au moins un logement (37) cylindrique orienté radialement est formé entre les tôles formées (33, 34) par au moins un renfoncement (33a, 34a),
- l'engrenage intérieur (32a) est formé sur un moyeu (32) fabriqué séparément,
- l'engrenage extérieur (35) est formé par au moins deux segments en forme de coque ou par une seule pièce en forme d'anneau,
- l'engrenage extérieur (35) et l'engrenage intérieur (32a) sont alignés sur l'élément de base (36) sur lequel ils sont fixés,
et où
- le logement (37) se situe dans le prolongement d'un trou (41) ménagé radialement dans l'engrenage extérieur (35) et présentant une ouverture tournée vers le manchon baladeur.

6. Synchroniseur (24) selon la revendication 5, où l'élément de fixation (7) est formé par au moins un rebord (40) faisant saillie à la hauteur de l'ouverture à partir du matériau dont est constitué l'engrenage extérieur.

7. Synchroniseur (1, 14, 24) selon la revendication 1 ou 5, où l'élément d'arrêt (7) est formé par une bille (8, 19, 39) ou par un boulon (27).
